# EUROPEAN PATENT APPLICATION

(11) **EP 4 734 006 A1**
(43) Date of publication of application: **29.04.2026**
(21) Application number: 25209675.5
(22) Date of filing: 20.10.2025
(51) Int. Cl.: G06N 5/022, G06F 16/901

(54) **INFORMATION PROCESSING PROGRAM, INFORMATION PROCESSING METHOD, AND INFORMATION PROCESSING DEVICE**

(30) Priority: 25.10.2024 JP 2024188671
(71) Applicant: FUJITSU LIMITED, Kawasaki-shi, Kanagawa 211-8588 (JP)
(72) Inventor: Takagi, Takuya, Kawasaki-shi, Kanagawa, 211-8588 (JP)
(74) Representative: Hoffmann Eitle

(57) **Abstract**

An information processing program causes a computer to execute a process, the process including generating a causal graph coupling a plurality of nodes by directed edges based on a plurality of data serving as a basis in generating the causal graph, the causal graph being generated so as to optimize a value of an objective function that includes a first term indicating that the more destination connections and connection sources shared between different nodes in the causal graph, a higher is an evaluation thereof; and updating the generated causal graph so as to aggregate, among the plurality of nodes, two or more nodes sharing a common connection destination and a common connection source, the two or more nodes being aggregated into a single node.

## Description

### FIELD

The embodiments discussed herein are related to an information processing program, an information processing method, and an information processing device.

### BACKGROUND

Conventionally, there is a causal search technique that generates a causal graph representing item-to-item causal relationships between multiple items based on multiple data representing combinations of values of each of the multiple items. The causal graph is, for example, a directed graph.

According to one prior art, for example, in a graph, each node has a contribution ratio indicating the degree of contribution to the state of the graph and when the graph changes, any node whose degree of importance based on the contribution ratio thereof is below a threshold is deleted. For example, refer to Japanese Laid-Open Patent Publication No. 2020-119261.

### SUMMARY

It is an object in one aspect of the embodiments to at least solve the above problems in the conventional technologies.

According to an aspect of an embodiment, an information processing program causes a computer to execute a process, the process including generating a causal graph coupling a plurality of nodes by directed edges based on a plurality of data serving as a basis in generating the causal graph, the causal graph being generated so as to optimize a value of an objective function that includes a first term indicating that the more destination connections and connection sources shared between different nodes in the causal graph, a higher is an evaluation thereof; and updating the generated causal graph so as to aggregate, among the plurality of nodes, two or more nodes sharing a common connection destination and a common connection source, the two or more nodes being aggregated into a single node.

An object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

Fig. 1 is an explanatory diagram depicting one example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a functional configuration of the information processing device 100.
Fig. 5 is an explanatory diagram depicting an example of a collapsible causal graph 500.
Fig. 6 is an explanatory diagram depicting an example of contents of a data management table 600.
Fig. 7 is an explanatory diagram depicting an example of operation of the information processing device 100.
Fig. 8 is a flowchart depicting an example of an overall processing procedure.

### DESCRIPTION OF EMBODIMENTS

First, problems associated with the conventional techniques are discussed. The prior art may reduce the readability of the causal graph. For example, because the number of items is proportional to the number of nodes in a causal graph, when the number of items is in the tens of thousands, a user must interpret a causal graph containing tens of thousands of nodes, making it difficult to properly interpret the causal graph.

Embodiments of an information processing program, an information processing method, and an information processing device according to the present disclosure are described in detail with reference to the accompanying drawings.

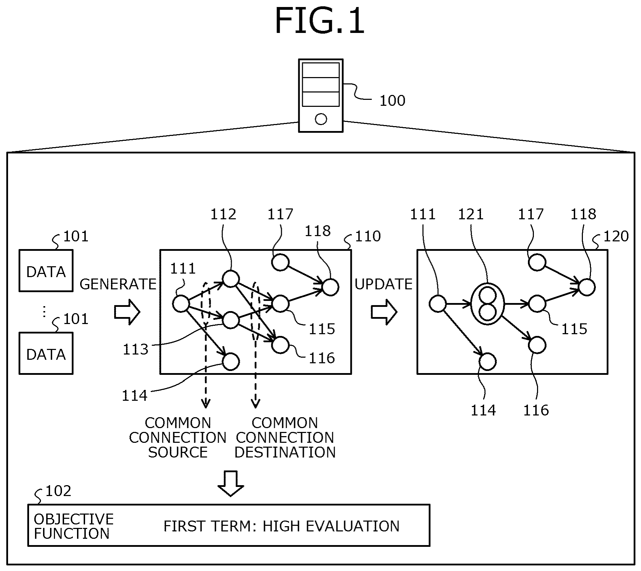

Fig. 1 is an explanatory diagram depicting one example of an information processing method according to an embodiment. An information processing device 100, which is a computer for improving the readability of a causal graph, is, for example, a server or a personal computer (PC).

The causal graph is, for example, a directed graph that has multiple nodes each representing a different item, with the nodes being coupled by effective edges. Items correspond to variables. A directed edge represents a causal relationship between items corresponding to the nodes coupled to each other by the directed edge. The value of an item represented by a node that is a connection destination of a directed edge is dependent on the value of an item represented by a node that is a connection source of the directed edge. A directed edge has, for example, a parameter representing a function that calculates the value of an item represented by a destination node from the value of an item represented by the source node.

Conventionally, there is a causal search technique that generates a causal graph based on multiple data representing combinations of values of multiple items. Examples of causal search techniques include LinGAM and No-tears. Multiple data are organized, for example, into tabular data. For example, each row of the tabular data corresponds to one piece of data. For example, the multiple data may be a collection of data relating to multiple attributes of a person and disease risk. The multiple attributes and disease risk of a person correspond to items.

However, conventional techniques may result in poor readability of the causal graph. Readability indicates how easily a user is able to interpret the causal graph and understand the causal relationships between items. This refers to the ease of interpretation. For example, the lower the cost for a user to understand the causal relationships between items, the better the readability of the causal graph is evaluated. The cost may be, for example, time, fatigue, power, memory usage, or money.

For example, the number of items is proportional to the number of nodes in the causal graph. Therefore, when the number of items is in the tens of thousands, a causal graph containing tens of thousands of nodes will be generated. Thus, a user must interpret a causal graph containing tens of thousands of nodes, making it difficult to properly interpret the causal graph and understand the causal relationships between items.

Furthermore, for example, it is difficult to display a causal graph containing tens of thousands of nodes. For example, it is difficult to display a causal graph containing tens of thousands of nodes so that the overlapping of each directed edge is minimal and so that each directed edge is easily distinguishable, thereby making it easier for the user to view. Thus, it is difficult for the user to properly interpret the causal graph and understand the causal relationships between items.

In this embodiment, an information processing method that may improve the readability of a causal graph is described. According to the information processing method, by updating a causal graph so that two or more nodes in the causal graph are aggregated into a single node, the number of nodes in the causal graph may be reduced, thereby improving the readability of the causal graph.

In Fig. 1, the information processing device 100 stores multiple data 101 that are used to generate a causal graph 110. The causal graph 110 includes multiple nodes, which are coupled to each other by directed edges. A node represents one of multiple items. In the example depicted in Fig. 1, the causal graph 110, for example, includes nodes 111 to 118.

The information processing device 100 stores an objective function 102. The objective function 102 includes a first term. The first term indicates that the more common the connection destinations and connection sources are between different nodes in the causal graph 110, the higher the evaluation. The first term indicates, for example, that the greater the number of combinations of nodes sharing common connection destinations and the greater the number of combinations of nodes sharing common connection sources in the causal graph 110, the higher the evaluation. As depicted in Fig. 1, for example, when different nodes 112 and 113 have a common connection source (the node 111) and common connection destinations (the nodes 115 and 116), the first term indicates a high evaluation. For example, the smaller the value of the objective function 102, the higher the evaluation. The first term indicates, for example, that the smaller the value of the first term, the higher the evaluation.

(1-1) The information processing device 100 generates the causal graph 110 based on the multiple data 101 so as to optimize the value of the objective function 102. The optimization is, for example, minimization. The information processing device 100 generates the causal graph 110 suitably according to the objective function, for example, by repeatedly performing a process of updating the causal graph 110 in a direction that optimizes the value of the objective function. In this way, the information processing device 100 may generate the causal graph 110 so as to include two or more nodes that are easy to aggregate into one node.

Here, the method of generating the causal graph 110 may be, for example, implemented by referring to Zheng, Xun, et al, "Dags with no tears: Continuous optimization for structure learning." Advances in neural information processing systems 31 (2018); and Zhong, Kai, et al, "Proximal quasi-newton for computationally intensive I1-regularized m-estimators." Advances in Neural Information Processing Systems 27 (2014).

(1-2) The information processing device 100 updates the generated causal graph 110 so as to aggregate two or more nodes that have the same destination and source into one node. In the example depicted in Fig. 1, the information processing device 100, for example, aggregates nodes 112 and 113 into one node 121, thereby updating the causal graph 110 to a causal graph 120. As a result, the information processing device 100 may reduce the number of nodes and the number of directed edges in the causal graph 110 and may obtain the causal graph 120 that is more readable than the causal graph 110.

The information processing device 100 outputs the updated causal graph 110. The output format may be, for example, display on a display, print out on a printer, transmission to another computer, or storage in a memory area. In the example depicted in Fig. 1, the information processing device 100, for example, outputs the causal graph 120 so that the user may refer to it. As a result, the information processing device 100 may make the causal graph 120 highly readable and accessible to the user. The information processing device 100 may then make the causal relationships between items easier for the user to understand. The information processing device 100 may reduce the cost incurred when the user interprets the causal relationships between items.

Here, while a case where the objective function 102 includes only the first term has been described, this is not a limitation. For example, the objective function 102 may further include a second term that evaluates the likelihood of the causal graph 110 for the multiple data 101. The second term indicates, for example, that the smaller the absolute value of the difference between the product of a data matrix representing the multiple data and the adjacency matrix of the causal graph 110 and the data matrix, the higher the evaluation. This allows the information processing device 100 to generate the causal graph 110 so as to accurately represent the causal relationships between items and include two or more nodes that are easily aggregated into one node.

While the above description has been given of a case in which functions of the information processing device 100 are implemented by a single computer, this is not limiting. For example, the functions of the information processing device 100 may be implemented by multiple computers working together. For example, the functions of the information processing device 100 may be implemented on a cloud.

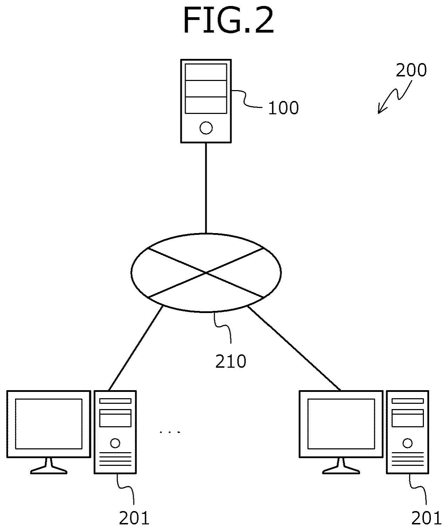

Next, with reference to Fig. 2, an example of an information processing system 200 to which the information processing device 100 depicted in Fig. 1 is applied will be described.

Fig. 2 is an explanatory diagram depicting an example of the information processing system 200. In Fig. 2, the information processing system 200 includes the information processing device 100 and a client apparatus 201.

In the information processing system 200, the information processing device 100 and the client apparatus 201 are coupled via a wired or wireless network 210. The network 210 is, for example, a local area network (LAN), a wide area network (WAN), or the Internet.

The information processing device 100 is a computer for improving the readability of a causal graph. The information processing device 100 obtains a processing request requesting the generation of a causal graph. The processing request includes, for example, multiple pieces of data that are the basis for generating the causal graph. The information processing device 100 obtains the processing request by, for example, receiving the processing request from the client apparatus 201. The information processing device 100 may obtain a processing request by, for example, receiving input of the processing request based on a user's operation input.

The information processing device 100 stores multiple data items that are used to generate a causal graph based on the processing request. The data represents, for example, a combination of values of multiple items. The multiple items include, for example, an item corresponding to an explanatory variable and an item corresponding to a dependent variable. The information processing device 100 stores, for example, tabular data that summarizes multiple data. The information processing device 100 stores an objective function for evaluating a causal graph. The objective function includes, for example, a first term and a second term. For example, the smaller the value of the objective function, the higher the evaluation.

The first term acts to increase the evaluation of a causal graph as different nodes in the causal graph have common destinations and source connections. For example, the first term acts to increase the evaluation of a causal graph as the number of combinations of nodes with common destinations and the number of combinations of nodes with common source connections in the causal graph increases. For example, the smaller the value of the first term, the higher the evaluation.

The second term evaluates the plausibility of a causal graph for multiple data. The second term acts to increase the evaluation of a causal graph as the causal graph is more plausible for multiple data. The second term acts, for example, such that the smaller the absolute value of the difference between the product of a data matrix representing multiple data and the adjacency matrix of the causal graph and the data matrix, the higher the evaluation of the causal graph. For example, the smaller the value of the second term, the higher the evaluation.

In response to a processing request, the information processing device 100 generates a causal graph to optimize the value of the objective function. The information processing device 100 updates the generated causal graph so that two or more nodes that have common connection destinations and connection sources are aggregated into a single node. The information processing device 100 transmits the updated causal graph to the client apparatus 201. The information processing device 100 outputs the updated causal graph so that it may be referenced by the user. The information processing device 100 is, for example, a server or a PC.

The client apparatus 201 is a computer that generates a processing request. The processing request requests the generation of a causal graph. The processing request includes, for example, multiple pieces of data that are the basis for generating the causal graph. The client apparatus 201 generates a processing request based on, for example, a user's operational input. The client apparatus 201 transmits the generated processing request to the information processing device 100. The client apparatus 201 receives the causal graph. The client apparatus 201 outputs the received causal graph so that the user may refer to it. The client apparatus 201 is, for example, a PC, a tablet terminal, or a smartphone.

Here, while a case where the information processing device 100 is a computer different from the client apparatus 201 has been described, this is not a limitation. For example, the information processing device 100 may have the functions of the client apparatus 201 and operate as the client apparatus 201.

Next, an example of application of the information processing system 200 will be described. For example, the information processing system 200 may be applied in the medical sector. In this case, the information processing device 100 may generate a causal graph with improved readability based on multiple data sets, which are sets of data related to human attributes and disease risks, and provide the graph to the user. In response to this, the user may, for example, refer to the causal graph to understand which attributes of people have a high risk of illness. In this case, the information processing device 100 may reduce the cost required to understand the causal relationships between items by providing a causal graph with improved readability.

Furthermore, for example, the information processing system 200 may be applied in the industrial sector. In this case, the information processing device 100 may, for example, generate a causal graph with improved readability based on multiple data sets, for example, data relating to attributes and turnover rates of people, and may provide the generated graph to the user. In response to this, the user may, for example, refer to the causal graph to understand which attributes of people have a high turnover rate. In this case, the information processing device 100 may reduce the cost required to understand the causal relationships between items by providing a causal graph with improved readability.

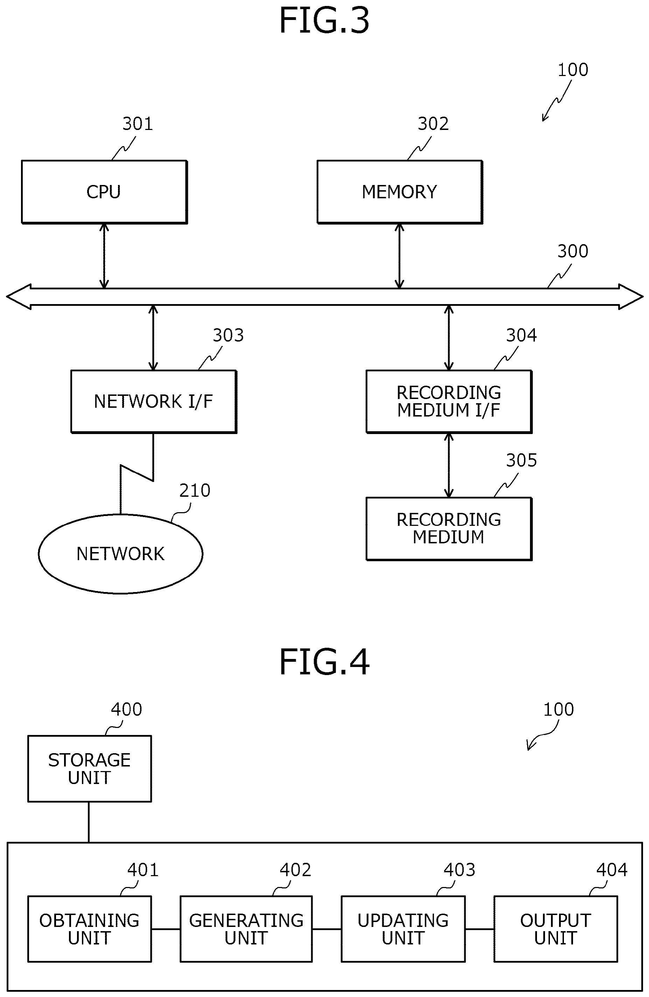

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disc drive, a solid-state drive (SSD), a universal serial bus (USB) port, or the like. The recording medium 305 is a nonvolatile memory storing data written thereto under the control of the recording medium I/F 304. The recording medium 305 is, for example, a disc, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

An example of a hardware configuration of the numerical calculation device 201 is the same as the example of the hardware configuration of the information processing device 100 depicted in Fig. 3 and thus, description thereof is omitted herein.

Next, an example of a functional configuration of the information processing device 100 will be described with reference to Fig. 4.

Fig. 4 is a block diagram depicting an example of the functional configuration of the information processing device 100. The information processing device 100 includes a storage unit 400, an obtaining unit 401, a generating unit 402, an updating unit 403, and an output unit 404.

The storage unit 400 is implemented, for example, by a storage area such as the memory 302 or the recording medium 305 depicted in Fig. 3. The following description will be given of a case in which the storage unit 400 is included in the information processing device 100, but this is not a limitation. For example, the storage unit 400 may be included in a device other than the information processing device 100, and the contents stored in the storage unit 400 may be accessible from the information processing device 100.

The obtaining unit 401 to the output unit 404 function as an example of a controller. For example, functions of the obtaining unit 401 to the output unit 404 are implement by, for example, causing the CPU 301 to execute a program stored in a storage area such as the memory 302 or the recording medium 305 depicted in Fig. 3, or by the network I/F 303. The processing results of the functional units are stored, for example, to a storage area such as the memory 302 or the recording medium 305 depicted in Fig. 3.

The storage unit 400 stores various information that is referenced or updated during the processes by the functional units. The storage unit 400 stores multiple data items that are used to generate a causal graph. The data, for example, represents a combination of values of multiple items. The multiple items include, for example, an item corresponding to a dependent variable and an item corresponding to an explanatory variable.

A causal graph represents a causal relationship between items. A causal graph is, for example, a directed graph that has multiple nodes each representing a different item, with the nodes being coupled by effective edges. A directed edge represents a causal relationship between items corresponding to the nodes coupled to each other by the directed edge. The value of an item represented by a node that is a connection destination of a directed edge is dependent on the value of an item represented by a node that is a connection source of the directed edge. A directed edge has, for example, a parameter representing a function that calculates the value of an item represented by a destination node from the value of an item represented by the source node.

The storage unit 400 stores an objective function for evaluating a causal graph. The objective function includes, for example, at least the first term. The objective function may further include, for example, the second term. For example, a smaller value of the objective function indicates a higher evaluation.

The first term acts to increase the evaluation of a causal graph as the number of common destinations and source connections between different nodes in the causal graph increases. For example, the first term acts to increase the evaluation of a causal graph as the number of combinations of nodes with common destinations and the number of combinations of nodes with common source connections increase. For example, the smaller the value of the first term, the higher the evaluation of the causal graph. For example, the value of the first term increases each time a node in the causal graph is a destination or source of only one node in each of multiple pairs including any two nodes in the causal graph, so that the evaluation of the causal graph decreases.

The second term evaluates the plausibility of a causal graph for multiple data. The second term acts to increase the evaluation of a causal graph as the causal graph becomes more plausible for multiple data. The second term acts, for example, such that the smaller the absolute value of the difference between the product of a data matrix representing multiple data and the adjacency matrix of the causal graph and the data matrix, the higher the evaluation of the causal graph. For example, the smaller the value of the second term, the higher the evaluation of the causal graph. The objective function is, for example, set in advance by a user. The objective function may be obtained by, for example, the obtaining unit 401.

The obtaining unit 401 obtains various information used in the processes by the functional units. The obtaining unit 401 stores the obtained various information in the storage unit 400 or outputs the information to the functional units. The obtaining unit 401 may also output various information stored in the storage unit 400 to the functional units. The obtaining unit 401 obtains various information based on, for example, a user's operation input. The obtaining unit 401 may receive various information from, for example, a device other than the information processing device 100.

The obtaining unit 401 obtains, for example, a processing request requesting the generation of a causal graph. The processing request includes, for example, multiple pieces of data. For example, the obtaining unit 401 obtains the processing request by receiving input of the processing request. For example, the obtaining unit 401 may obtain the processing request by receiving the processing request from another computer. The other computer is, for example, the client apparatus 201.

The obtaining unit 401 obtains, for example, multiple pieces of data. For example, the obtaining unit 401 obtains the multiple pieces of data by extracting the multiple pieces of data from the processing request. For example, the obtaining unit 401 may obtain the multiple pieces of data by receiving input of the multiple pieces of data. For example, the obtaining unit 401 may obtain the multiple pieces of data by receiving the multiple pieces of data from the other computer. The other computer is, for example, the client apparatus 201.

The obtaining unit 401 obtains, for example, an objective function. For example, the obtaining unit 401 obtains the objective function by extracting the objective function from the processing request. For example, the obtaining unit 401 may obtain the objective function by receiving input of the objective function. For example, the obtaining unit 401 may obtain the objective function by receiving the objective function from another computer, such as the client apparatus 201.

The obtaining unit 401 may receive a start trigger to start the process of any one of the functional units. The start trigger may be, for example, a predetermined user input. The start trigger may be, for example, the receipt of predetermined information from another computer. The start trigger may be, for example, the output of predetermined information by one of the functional units. The obtaining unit 401 regards, for example, obtaining a processing request as a start trigger to start a process by the generating unit 402 and the updating unit 403.

The generating unit 402 generates a causal graph based on multiple data sets to optimize the value of the objective function. The generating unit 402 generates an appropriate causal graph according to the objective function by, for example, repeatedly updating the causal graph in a direction that optimizes the value of the objective function. This allows the generating unit 402 to generate a causal graph that includes two or more nodes that are easily aggregated into one node based on the objective function that includes at least the first term. The generating unit 402 may generate a causal graph that accurately represents the causal relationships between items based on an objective function that includes the second term.

The generating unit 402 may, for example, generate multiple candidates for a causal graph and generate a causal graph using one of the multiple candidates that depicts the highest evaluation based on the value of the objective function for each candidate. This allows the generating unit 402 to generate a causal graph that includes two or more nodes that are easily aggregated into one node based on the objective function including at least the first term. The generating unit 402 may generate a causal graph that accurately represents the causal relationships between items based on an objective function including the second term.

The updating unit 403 updates the causal graph generated by the generating unit 402 so that two or more nodes that share common connection destinations and connection sources are aggregated into one node. The updating unit 403, for example, searches for a group of two or more nodes that share common connection destinations and connection sources in the causal graph. The updating unit 403, for example, generates a single node that collectively represents the items represented by each node of a discovered group, and adds the node to the causal graph.

The updating unit 403, for example, updates the causal graph so as to connect directed edges from the connection source of each node of the discovered group to the single generated node. The updating unit 403, for example, updates the causal graph so as to connect directed edges from the single generated node to the connection destination of each node of the discovered group. The updating unit 403, for example, deletes each node of the discovered group from the causal graph. This allows the updating unit 403 to update the causal graph so as to reduce the number of nodes and the number of directed edges, thereby improving the readability of the causal graph.

The output unit 404 outputs the processing results of at least one of the functional units. The output format may be, for example, display on a display, print out on a printer, transmission to an external device via the network I/F 303, or storage in a storage area such as the memory 302 or the recording medium 305. This allows the output unit 404 to notify the user of the processing results of at least one of the functional units, thereby improving the convenience of the information processing device 100.

The output unit 404 outputs, for example, the causal graph updated by the updating unit 403. For example, the output unit 404 outputs the causal graph so that the causal graph may be referenced by the user. For example, the output unit 404 transmits the causal graph to another computer. The other computer is, for example, the client apparatus 201. This allows the output unit 404 to make the causal graph with improved readability available for external reference. Thus, the output unit 404 may make it easier for the user to understand the causal relationships between items by using the causal graph with improved readability.

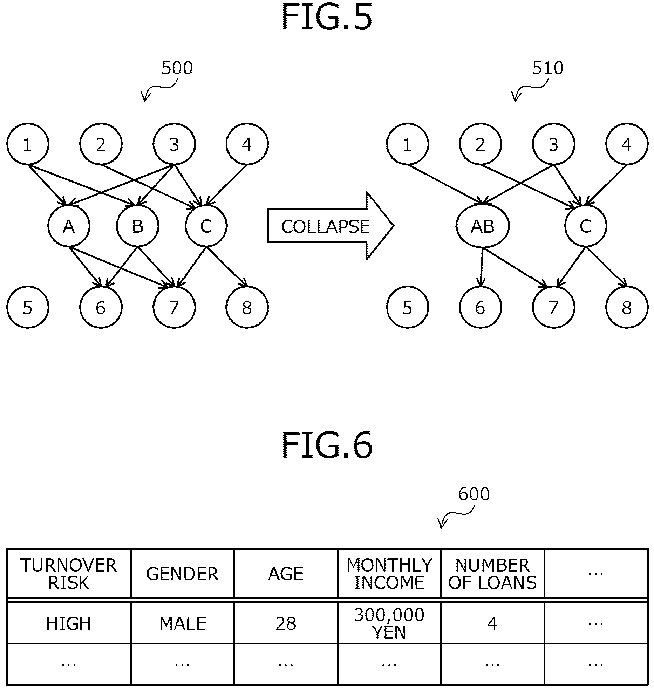

Next, an example of operation of the information processing device 100 will be described using Figs. 5 to 7. In this example, the information processing device 100 generates a collapsible causal graph 500 based on multiple data and reduces the generated causal graph 500 so as to aggregate two or more nodes, thereby improving the readability of the causal graph 500. First, an example of the collapsible causal graph 500 will be described with reference to Fig. 5.

Fig. 5 is an explanatory diagram depicting an example of the collapsible causal graph 500. In Fig. 5, the causal graph 500 includes, for example, node 1, node 2, node 3, node 4, node 5, node 6, node 7, node 8, node A, node B, and node C. Reducing refers to updating the causal graph 500 by aggregating two or more nodes that share a common destination and source into a single node, to the extent that the causal relationships between the items represented by the causal graph 500 do not change. "Collapsible " means that the causal graph 500 includes two or more nodes that share a common destination and source.

In the example depicted in Fig. 5, in the causal graph 500, node A and node B share a common destination and source via directed edges. For example, node A and node B both share a common source via a directed edge, with node 1 and node 3 as their destinations. For example, node A and node B both share common destinations via directed edges, with node 6 and node 7 as the destinations. Therefore, the causal graph 500 is collapsible.

Here, it is conceivable to aggregate node A and node B, which share a common source and common destinations via directed edges, into a single node AB, and update the causal graph 500 to a causal graph 510. Even when node A and node B are aggregated, the causal graph 510, like the causal graph 500, represents the causal relationship in which items A and B are dependent on items 1 and 3, and the causal relationship in which items 6 and 7 are dependent on items A and B. Therefore, like the causal graph 500, the causal graph 510 represents the causal relationships between items.

Therefore, when the information processing device 100 may generate a collapsible causal graph 500 based on multiple data, it is conceivable to provide the user with the causal graph 510 whose readability has been improved by reduction. Below, a specific description will be given of how the information processing device 100 generates the collapsible causal graph 500.

The information processing device 100 obtains, for example, multiple data that are the basis for generating the causal graph. The data includes, for example, values of people's attributes and values of employee turnover risk. Examples of attributes include age, gender, monthly income, number of outstanding loans, career aspirations, overtime hours, and salary difference with other companies in the same sector. The information processing device 100 stores the obtained data using a data management table 600, which will be described with reference to Fig. 6. An example of the contents of the data management table 600, which compiles the data, is described with reference to Fig. 6.

Fig. 6 is an explanatory diagram depicting an example of the contents of the data management table 600. The data management table 600 is implemented, for example, by a storage area such as the memory 302 or the recording medium 305 of the information processing device 100 depicted in Fig. 3. As depicted in Fig. 6, the data management table 600 has fields for employee turnover risk, gender, age, monthly income, and number of loans. The data management table 600 may further have fields for career aspirations, overtime hours, and salary difference with other companies in the same sector.

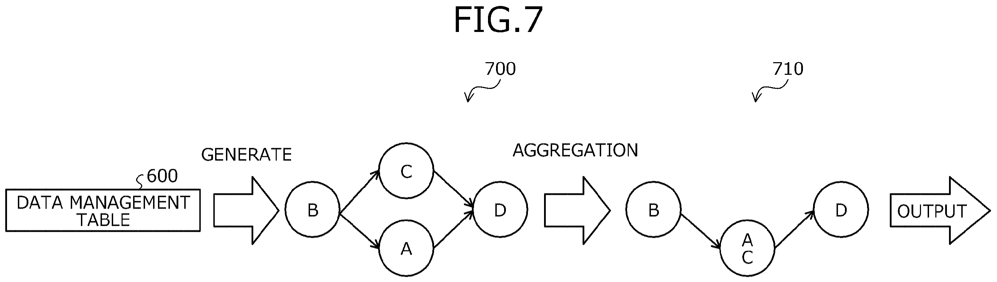

The data management table 600 stores data as records by setting information in each field for each person. In the employee turnover risk field, the employee turnover risk of the person is set. In the gender field, the person's gender is set. In the age field, the person's age is set. In the monthly income field, the person's monthly income is set. In the number of loans field, the number of unpaid loans of the person is set. Next, with reference to Fig. 7, an example of the operation of the information processing device 100 that generates and updates a causal graph 700 based on multiple data will be described.

Fig. 7 is an explanatory diagram depicting an example of the operation of the information processing device 100. In Fig. 7, the information processing device 100 sets an objective function for evaluating the causal graph 700 in order to generate a collapsible causal graph 700. The objective function includes a first term H(W) and a second term ||X-XW||^2. The objective function is, for example, ||X-XW||^2+λH(W). For example, the smaller the value of the objective function, the higher the evaluation of the causal graph 700. The information processing device 100 may set the objective function so that a larger value indicates a higher evaluation of the causal graph 700.

X is a data matrix representing multiple pieces of data. Each row of the data matrix corresponds to a piece of data. W is the adjacency matrix of the causal graph 700. The adjacency matrix includes, for example, as a component, a function that enables the value of one item having a causal relationship to be calculated from the value of the other item.

The first term H(W) is Σ_(i∈d)Σ_(j∈d)Σ_(k∈d) (|W[i][k]-W[j][k]|+|W[k][i]-W[k][j]|). W[x][y] is flag information indicating whether a directed edge exists from node x to node y. For example, a value of 1 indicates the presence of a directed edge, and a value of 0 indicates the absence of a directed edge.

In the first term H(W), |W[i][k]-W[j][k]| takes a value of 1 when only one of node i and node j has node k as a connection destination. |W[i][k]-W[j][k]| takes a value of 0 when node i and node j both have node k as a connection destination, or when neither has node k as a connection destination. For this reason, the more pairs of nodes that do not have a common connection destination in the causal graph 700, the larger the value of the first term H(W) tends to be, and the worse the evaluation of the causal graph 700 becomes.

In the first term H(W), |W[k][i]-W[k][j]| takes a value of 1 when only one of node i and node j has node k as a connection source. The value of |W[k][i]-W[k][j]| is 0 when node i and node j both have node k as a connection source, or when neither has node k as a connection source. Therefore, the more pairs of nodes in the causal graph 700 that do not share a common connection source, the larger the value of the first term H(W) tends to be, and the worse the evaluation of the causal graph 700.

As described, the causal graph 700 is collapsible and the greater the number of nodes that may be aggregated, the smaller the value of the first term H(W) is, improving the evaluation of the causal graph 700. The fewer the number of nodes that may be aggregated in the causal graph 700, the larger the value of the first term H(W) is and the worse the evaluation of the causal graph 700 is. Therefore, the first term H(W) represents the extent to which the causal graph 700 may be collapsed and represents the ease of collapsing.

The second term |X-XW||^2 represents the degree to which XW restores X. The second term |X-XW||^2 represents the accuracy of the causal graph 700. Accuracy indicates, for example, how accurately the causal relationships between items are represented. λ is a hyperparameter that balances the first term and the second term. λ controls, for example, how much importance is placed on the ease of collapsing the causal graph 700 or the accuracy of the causal graph 700.

(7-1) The information processing device 100 generates a collapsible causal graph 700 so as to minimize the value of the objective function. Here, the larger the value of λ, the more priority is placed on improving the ease of collapsing the generated causal graph 700, and the smaller the value, the more priority is placed on improving the accuracy of the generated causal graph 700. The information processing device 100, for example, sets the causal graph 700 to an initial state, and then repeatedly performs a process of updating the causal graph 700 in a direction that minimizes the value of the objective function until a termination condition is met, thereby generating the collapsible causal graph 700. The termination condition is, for example, that the causal graph 700 has been updated a specified number of times. The termination condition is, for example, that the value of the objective function is not more than a predetermined threshold. The termination condition is, for example, that the rate of change in the value of the objective function is not more than a predetermined threshold.

(7-2) The information processing device 100 updates the generated causal graph 700 to a causal graph 710 by collapsing the generated causal graph 700. The information processing device 100 collapses the causal graph 700 by, for example, aggregating node A and node C, which have a common source and common destinations, into a single node AC in the causal graph 700. The information processing device 100 outputs the causal graph 710 so that the user may refer thereto.

This allows the information processing device 100 to reduce the number of nodes in the causal graph 710 to less than the number of items. The information processing device 100 may obtain the causal graph 710 with improved readability. The information processing device 100 may generate the causal graph 700, which is both easy to collapse and accurate using an objective function, and may provide the causal graph 700 to the user. Thus, the information processing device 100 may obtain the causal graph 710 that ensures both ease to collapse and accuracy, and the information processing device 100 may the causal graph 710 it to the user.

The information processing device 100 may obtain the causal graph 710 that represents the causal relationships between items in a similar manner to the causal graph 700, but that is also easier to display than the causal graph 700. The information processing device 100 may, for example, make it easier for the user to visually recognize the causal graph 710 by minimizing overlap between directed edges and making it easier to distinguish between the directed edges. The information processing device 100 may reduce the cost incurred when the user interprets the causal relationships between items. The cost may be, for example, time, fatigue, power, memory usage, or money.

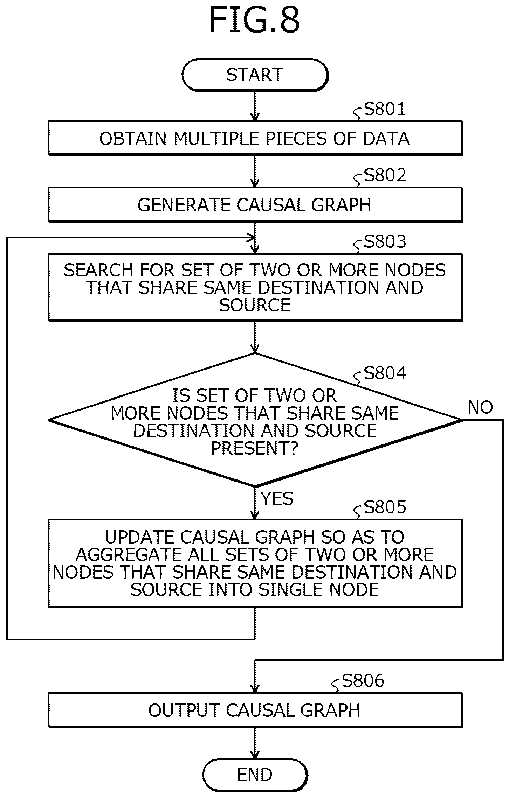

Next, an example of an overall processing procedure executed by the information processing device 100 will be described with reference to Fig. 8. The overall processing procedure is implemented, for example, by the CPU 301, storage areas such as the memory 302 and the recording medium 305, and the network I/F 303 depicted in Fig. 3.

Fig. 8 is a flowchart depicting an example of the overall processing procedure. In Fig. 8, the information processing device 100 obtains multiple pieces of data (step S801). Next, the information processing device 100 generates a causal graph to optimize the value of the objective function (step S802).

Next, the information processing device 100 searches the causal graph for a set of two or more nodes that share the same destination and source (step S803). Next, the information processing device 100 determines whether a set of two or more nodes that share the same destination and source is present (step S804). When no set of two or more nodes is present (step S804: NO), the information processing device 100 proceeds to the process at step S806. On the other hand, when a set of two or more nodes is present (step S804: YES), the information processing device 100 proceeds to the process at step S805.

At step S805, the information processing device 100 updates the causal graph so as to aggregate all sets of two or more nodes that share the same destination and source into a single node (step S805). The information processing device 100 then returns to the process at step S803. At step S806, the information processing device 100 outputs the causal graph (step S806). The information processing device 100 then ends the overall processing.

As described above, the information processing device 100 may obtain multiple data sets that are used to generate a causal graph in which nodes are coupled to each other by directed edges. The information processing device 100 may set based on multiple data sets, an objective function that includes the first term that indicates that the more common the destinations and sources of connections are between different nodes in the causal graph, the higher the evaluation. The information processing device 100 may generate a causal graph to optimize the value of the objective function. The information processing device 100 may update the generated causal graph so that two or more nodes that all have common destinations and sources are aggregated into a single node. This allows the information processing device 100 to obtain a causal graph with improved readability.

According to the information processing device 100, an objective function may be set that includes, in addition to the first term, the second term that evaluates the plausibility of a causal graph for multiple data. This enables the information processing device 100 to easily generate a causal graph with improved accuracy.

According to the information processing device 100, an objective function may be set that includes the first term that indicates a higher evaluation the greater the number of combinations of nodes with a common destination and the greater the number of combinations of nodes with a common source in the causal graph. This enables the information processing device 100 to easily and appropriately evaluate the ease of collapsing the causal graph using the objective function.

According to the information processing device 100, an objective function may be set that includes the first term that increases in value so that the evaluation worsens each time each node in the causal graph becomes the destination or source of only one node in each of multiple pairs of nodes in the causal graph. According to the information processing device 100, a smaller value of the objective function may be regarded as a higher evaluation. As a result, the information processing device 100 may appropriately generate a causal graph by minimizing the objective function.

The information processing device 100 may set an objective function including the second term that indicates that the smaller the absolute value of the difference between the data matrix representing multiple data and the adjacency matrix of the causal graph, the higher the evaluation. This allows the information processing device 100 to easily and appropriately evaluate the accuracy of the causal graph using the objective function.

The information processing device 100 may generate a causal graph by repeatedly performing a process of updating the causal graph in a direction that optimizes the value of the objective function. This allows the information processing device 100 to generate an appropriate causal graph according to the objective function.

The information processing device 100 generates a causal graph using one of the multiple candidates that depicts the highest evaluation based on the objective function values for multiple candidates of the causal graph. This allows the information processing device 100 to generate an appropriate causal graph according to the objective function.

The information processing device 100 may output an updated causal graph. This enables the information processing device 100 to make a causal graph with improved readability available externally.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

According to one aspect, the readability of causal graphs may be improved.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An information processing program causing a computer to execute a process, the process comprising:
generating a causal graph coupling a plurality of nodes by directed edges based on a plurality of data serving as a basis in generating the causal graph, the causal graph being generated so as to optimize a value of an objective function that includes a first term indicating that the more destination connections and connection sources shared between different nodes in the causal graph, a higher is an evaluation thereof; and
updating the generated causal graph so as to aggregate, among the plurality of nodes, two or more nodes sharing a common connection destination and a common connection source, the two or more nodes being aggregated into a single node.

2. The information processing program according to claim 1, wherein
the objective function further includes a second term evaluating a plausibility of the causal graph with respect to the plurality of data.

3. The information processing program according to claim 2, wherein
the first term indicates that in the causal graph, of the plurality of nodes, a higher number of combinations of nodes sharing a common connection destination and a higher number of combinations of nodes having a common connection source, the higher is the evaluation thereof.

4. The information processing program according to claim 3, wherein
the objective function indicates a smaller is the value of the objective function, the higher is the evaluation, and
the first term increases in value so as to worsen the evaluation each time a node of the causal graph becomes a connection destination or a connection source for only one node of any pair among a plurality of pairs of nodes in the causal graph.

5. The information processing program according to claim 2 or 3, wherein
the second term indicates that a smaller is an absolute value of a difference of a data matrix representing the plurality of data, and a product of the data matrix and an adjacency matrix of the causal graph, the higher is the evaluation.

6. The information processing program according to any one of claims 1 to 5, wherein
the generating includes generating the causal graph by repeatedly performing a process of updating the causal graph in a direction that optimizes the value of the objective function.

7. The information processing program according to any one of claims 1 to 6, wherein
the generating includes generating the causal graph from any one of a plurality of candidates that indicates a highest evaluation based on values of the objective function for the plurality of candidates of the causal graph.

8. The information processing program according to any one of claims 1 to 6, wherein
the updated causal graph is output.

9. An information processing method executed by a computer, the method comprising:
generating a causal graph coupling a plurality of nodes by directed edges based on a plurality of data serving as a basis in generating the causal graph, the causal graph being generated so as to optimize a value of an objective function that includes a first term indicating that the more destination connections and connection sources shared between different nodes in the causal graph, a higher is an evaluation thereof; and
updating the generated causal graph so as to aggregate, among the plurality of nodes, two or more nodes sharing a common connection destination and a common connection source, the two or more nodes being aggregated into a single node.

10. An information processing device, comprising:
a memory;
a processor coupled to the memory, the processor configured to:
generate a causal graph coupling a plurality of nodes by directed edges based on a plurality of data serving as a basis in generating the causal graph, the causal graph being generated so as to optimize a value of an objective function that includes a first term indicating that the more destination connections and connection sources shared between different nodes in the causal graph, a higher is an evaluation thereof; and
update the generated causal graph so as to aggregate, among the plurality of nodes, two or more nodes sharing a common connection destination and a common connection source, the two or more nodes being aggregated into a single node.
